(19) Europäisches Patentamt
European Patent Office
Office européen des brevets

(11) **EP 2 644 530 A1**

(12) **EUROPÄISCHE PATENTANMELDUNG**

(43) Veröffentlichungstag:
**02.10.2013 Patentblatt 2013/40**

(51) Int Cl.:
***B65D 75/58*** *(2006.01)*     ***B29C 65/08*** *(2006.01)*
***B29C 65/00*** *(2006.01)*

(21) Anmeldenummer: **13001312.1**

(22) Anmeldetag: **15.03.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **30.03.2012 DE 202012003293 U**

(71) Anmelder: **Pöppelmann Holding GmbH & Co. KG.**
**49393 Lohne (DE)**

(72) Erfinder: **Schick, Werner**
**49434 Neuenkirchen (DE)**

(74) Vertreter: **Wischmeyer, André et al**
**Busse & Busse**
**Patent- und Rechtsanwälte**
**Partnerschaft**
**Großhandelsring 6**
**49084 Osnabrück (DE)**

Bemerkungen:
Ein Antrag gemäss Regel 139 EPÜ auf Berichtigung der Beschreibung liegt vor. Über diesen Antrag wird im Laufe des Verfahrens vor der Prüfungsabteilung eine Entscheidung getroffen (Richtlinien für die Prüfung im EPA, A-V, 3.).

(54) **Einschweißausgießer**

(57) Einschweißausgießer zum Verbinden mit einem Behältnis, insbesondere zum Verbinden mit zwei Folienwänden eines Kunststoffbehältnisses, wobei der Einschweißausgießer einen mit einem eine vertikale Längsmittelachse (1) aufweisenden Ausgießkanal (2) versehenen Hals (3) und zwei hiermit verbundene, vorzugsweise mit Schweißlinien (4) versehene, äußere Seitenflächen (6) aufweist, die zur Verschweißung mit dem Behältnis vorgesehen sind und an deren zugehörigen Seitenwänden (11,12) innenseitig eine Mehrzahl von Versteifungsstegen (7,8,9) angeordnet sind, die Eckübergänge (7.1,7.2,8.1.,8.2,9.1,9.2) mit der jeweiligen Seitenwand (12) ausbilden, wobei betrachtet in einer Ebene quer zur Längsmittelachse (1) ein Eckübergang (7.1,7.2,8.1.,8.2,9.1,9.2) durch eine zwischen zwei sich schneidenden Geraden (7.3,7.4,8.3,8.4,9.3,9.4,10.1) befindliche Kontur des Einschweißausgießers definiert ist, wobei die eine Gerade (10.1) die Haupterstreckung der Oberfläche (10) der Seitenwand (12) und die andere Gerade (7.3,7.4,8.3,8.4,9.3,9.4) diejenige der Oberfläche des Versteifungsstegs (7,8,9) darstellt, wobei die Kontur zumindest eines Eckübergangs (7.3,7.4,8.3,8.4,9.3,9.4) zur Stabilisierung des Einschweißausgießers während eines Ultraschall-Einschweißvorganges eine Krümmung kleiner 10/mm

Fig. 1

EP 2 644 530 A1

## Beschreibung

Die vorliegende Erfindung betrifft einen Gegenstand nach dem Oberbegriff des Anspruchs 1.

Ein gattungsgemäßer Gegenstand ist beispielsweise aus der DE 20 2006 013 587 U1 bekannt. Umfangreiche Versuche haben gezeigt, dass dieser Gegenstand nicht dazu geeignet ist, mittels Ultraschall mit den Folienwänden eines Folienbeutels oder eines anderen Behältnisses verbunden zu werden. Dies gilt für Ausgießer aus z.B. PE genauso wie für Beutel oder Ausgießer aus Polypropylen.

Typischerweise weist der Einschweißausgießer (nachfolgend auch "Ausgießer") eine auch "Schiffchen" genannte Basis auf, deren Seitenwände äußere Seitenflächen aufweisen, die in ihren Endbereichen ineinander übergehen. Die Seitenflächen werden mit und zwischen den beiden Folienwänden eines Behältnisses verbunden, insb. verschweißt. Typischerweise einstükkig ist an das Schiffchen bzw. die Seitenflächen ein kragenartiger Bereich angeformt, der in einen eine vertikale Längsmittelachse aufweisenden Ausgießkanal aufweisenden Hals übergeht. Ein solcher ist außenseitig oftmals mit einem Gewinde versehen, um einen befüllten Folienbeutel vor Entleerung durch den Ausgießkanal mit einem Verschluss zu sichern. Alternativ kann der Hals zumindest teilweise auch direkt in das Schiffchen übergehen. Die Seitenflächen des Schiffchens können plan, aufgeraut, mit oder ohne Rippen und/oder mit Schweißlinien versehen sein. Darüber hinaus kann der Hals Führungsstege aufweisen, die für eine Führung in einer Abfüll- oder Siegelanlage verwendet werden können.

Zur Aussteifung der Seitenwände des Schiffchens weist ein gattungsgemäßer Einschweißausgießer innenseitig eine Mehrzahl, d.h. zumindest zwei Versteifungsstege auf, die Ecküübergange mit der jeweiligen Seitenwand ausbilden, wobei betrachtet in einer Ebene quer zur Längsmittelachse ein Ecküübergang durch eine zwischen zwei sich schneidenden Geraden befindliche Kontur des Einschweißausgießers definiert ist, wobei die eine Gerade die Haupterstreckung der Oberfläche der Seitenwand und die andere Gerade diejenige Haupterstreckung der Oberfläche des Versteifungsstegs (jeweils betrachtet in der gebildeten Ebene) darstellt. In der betrachteten Ebene sind die Geraden bei geradem Verlauf der Versteifungsstege deckungsgleich mit dem Rand des Stegs, gleiches gilt analog für gerade verlaufende Seitenwände. Falls die Seitenwände gekrümmt ausgebildet sind, stellt die Gerade eine Asymptote an dem Rand Seitenwand dar, die die Seitenwand dort berührt, wo eine Gerade des Versteifungsstegs die Seitenwand beginnt zu schneiden. Falls der Versteifungssteg geschwungen auf eine Seitenwand auftrifft, kann die Gerade auch durch eine an die Krümmung des Versteifungsstegs angepasste Asymptote ersetzt werden, die dann entsprechend die Gerade der Seitenwand schneidet.

Umfangsreiche Versuche mit gattungsgemäßen Einschweißausgießern, die Stegbreiten zwischen 0,5 und 0,9 mm aufweisen, haben gezeigt, dass diese den Belastungen bei einem Ultraschallschweißvorgang, bei dem durch die an den Seitenflächen des Schiffchens anliegenden Siegelbacken mechanische Energie auf die Seitenwände einwirkt, nicht gewachsen sind. Die Versteifungsstege reißen ab. Dies gilt es zu vermeiden.

Es ist daher Aufgabe der vorliegenden Erfindung, einen gattungsgemäßen Einschweißausgießer für den Einsatz in einer Ultraschallsiegelstation auszubilden.

Die Aufgabe wird gelöst durch einen Gegenstand gemäß Anspruch 1 oder 8. Vorteilhafte Ausgestaltungen der Erfindung sind den auf diesen Anspruch rückbezogenen Unteransprüchen sowie der nachfolgenden Beschreibung zu entnehmen.

Erfindungsgemäß ist vorgesehen, dass die Kontur zumindest eines Ecküübergangs zur Stabilisierung des Einschweißausgießers während eines Ultraschall-Einschweißvorganges eine Krümmung von $\leq 10/mm$ aufweist. Insbesondere wird hierbei der Betrag der Krümmung betrachtet, der kleiner gleich 10/mm ist. Überraschenderweise hat sich gezeigt, dass sich insbesondere bei den verwendeten Stegbreiten zwischen 0, 5 und 0, 9 mm die Einleitung der aus den Seitenwänden in die Stege überführten Energie als unkritisch erweist, wenn die Kontur im Ecküübergang eine ausreichend flache bzw. kleine Krümmung aufweist. Genau verstanden ist dieses Phänomen noch nicht, es zeigt sich jedoch, dass durch den Verzicht auf stärker ausgebildete Ecken keine Energiespitzen an kritischen Stellen auftreten und somit die Einleitung von Energie aus den Seitenwänden in die Versteifungsstege "glatter" verläuft. Der oder die Krümmungen werden hierbei regelmäßig von einem Punkt aus betrachtet, der bezüglich der Geraden der Seitenwand auf der zum Inneren des Einschweißausgießers liegenden Seite befindlich ist. Insbesondere lässt sich die Kontur betrachtet von dem (Krümmungsmittel-) Punkt aus durch einen oder mehrere nebeneinander befindliche Krümmungs- oder Schmiegekreise beschreiben.

Anstelle einer Versteifung für das Ultraschalleinschweißen kann ein solches Schiffchen natürlich auch für andere oder auf ähnlichen Prinzipien basierenden Vibrationsschweißverfahren vorteilhaft verwendet werden. Das Schiffchen kann für Schweißverfahren verwendet werden, bei denen auf die Aussenseite des Schiffchens insbesondere wiederholt, z.B. gepulste, Energiestöße aufgebracht werden, die zu mechanischen Belastungen innerhalb des Ausgießermaterials führen.

Während bereits lediglich auf einer Seite eine ausreichend glatte Einleitung von Energie ohne kritische mechanische Belastungsspitzen ausreichen kann, ist es vorteilhaft, Ecküübergänge auf beiden Seiten eines Versteifungssteges entsprechend gerundet auszubilden und mit einer Krümmung, deren Betrag $\leq 10/mm$ ist, zu versehen. Nachfolgend wird bei Werten der "Krümmung" jeweils immer deren Betrag betrachtet.

Betrachtet wird die Kontur jeweils ausgehend von einem Krümmungsmittelpunkt, der wie vorbeschrieben jeweils innenseitig der Seitenwände, jeweils zwischen Seitenwand und Steg angeordnet ist.

Besonders vorteilhaft ist eine Ausbildung der Erfindung, wenn die Kontur des Eckübergangs einen Kreisbogen ausbildet, was bei der Herstellung der Einschweißausgießerform einfacherer zu berechnen ist.

Eine nahezu ausschussfreie Herstellung von für einen Ultraschall-Einschweißvorgang verwendbaren Einschweißausgießern ergibt sich, wenn die Kontur eines Kreisbogenabschnitts bzw. die Kontur des gesamten Eckübergangs kreisbogenförmig und mit (einem Betrag) einer Krümmung ≤ 8/mm, vorzugsweise ≤ 6,7/mm, aufweist. Letzteres entspricht einem Radius eines zugehörigen Kreisbogenabschnitts von rund 0,15 mm. Vorzugsweise beträgt der Radius einen zugehörigen Kreisbogenabschnitts, der die Kontur im Eckübergang dargestellt, mindestens 0,15 mm.

Vorteilhafterweise ist betrachtet in einer Unteransicht in Richtung der Längsmittelachse zumindest ein von der einen Seitenwand zur gegenüberliegenden Seitenwand reichender Versteifungssteg in allen vier Eckübergängen mit einer Krümmung ≤ 10/mm, insbesondere ≤ 6,7/mm, versehen. Vorzugsweise weist ein solcher Versteifungssteg eine Breite zwischen 0,7 und 0,55 mm auf.

Eine weiterhin verbesserte Einleitung der Ultraschallenergie in den Einschweißausgießer ergibt sich, wenn die Versteifungsstege der Breite zwischen 0,55 und 0,7 zumindest einen Eckübergang mit (einem Betrag) einer Krümmung von ≤ 3,5/mm aufweisen.

Auch nur an einer Seitenwand angebundenen Versteifungsstege, die mit einer Breite von beispielsweise 0,6 mm versehen sind, weisen vorzugsweise eine Krümmung von ≤ 10/mm, vorzugsweise ≤ 6,7/mm auf.

Es hat sich gezeigt, dass anders als es zu erwarten war, insbesondere die dickeren Versteifungsstege mit Breiten von beispielsweise 0,7 oder 0,8 mm mit kleineren Krümmungen, d.h. größeren Krümmungsradien, versehen sein müssen, um einen Einschweißausgießer Ultraschall-schweißtauglich zu machen.

Neben den Übergängen zu den Seitenwänden weist ein Einschweißausgießer bei seinem Schiffchen auch einen kragenförmigen Abschnitt, auch Decke genannt, im Übergangsbereich zum Hals auf. An diesen Abschnitt sind die Versteifungsstege ebenfalls angebunden und bilden dort Deckenübergange aus. Diese sind vorzugsweise mit einer Krümmung ≤ 10/mm versehen, vorzugsweise mit einer Krümmung ≤ 6,7/mm.

Analog zu den Eckübergängen definieren sich die Deckenübergänge als Kontur des Ausgießers zwischen in der Seitenfläche des Versteifungsstegs und in der Decke verlaufenden, miteinander schneidenden Geraden. Betrachtet wird hierbei eine Ebene, in der die zentrale Längsmittelachse liegt. Der Deckenübergang ist vorzugsweise kreisbogenförmig bzw. abschnittsweise kreisbogenförmig ausgebildet.

Die eingangs gestellte Aufgabe wird ebenfalls gelöst durch vorzugsweise kleine (d.h. mit einem Ausgießkanaldurchmesser von kleiner 8 mm versehen) Einschweißausgießer, die keine Versteifungsstege aufweisen, sondern bei denen es gilt, den Übergang von Decke und Seitenwand auszusteifen. Der Deckenseitenübergang dieser Einschweißausgießer ist auf analoge Weise zu definieren wie die vorbeschriebenen Übergänge, nämlich anhand von Geraden, die sich an die jeweilige Oberfläche anschmiegend schneiden. Erfindungsgemäß ist ein solcher Deckenseitenübergang mit einer Krümmung versehen, die kleiner 10/mm ist, wobei sich der Krümmungsmittelpunkt wiederum in dem materialfreien Bereich zwischen Decke und Seitenwand befindet. Für diese Einschweißausgießer gelten auch die vor- oder nachbeschriebenen Weiterbildungen der anderen Übergänge.

Insbesondere kann ein solcher Deckenseitenübergang auch bei einem der vor- oder nachbeschriebenen, mit Versteifungsstegen versehenen Ausgießern zu erfindungsgemäßen Weiterbildungen führen. So ist in einem weiteren vorteilhaften Ausführungsbeispiel der Erfindung neben dem vorbeschriebenen Eckübergang auch ein Deckenseitenübergang der Seitenwand zur Decke mit einer Krümmung kleiner 10/mm versehen. Somit ist auch die Anbindung der Seitenwand an die Decke bestmöglich gesichert. Auch hierbei ist der Deckenseitenübergang analog wie die weiteren Eck- oder Deckenübergänge zu definieren.

Sowohl die verschiedenen Decken-, Deckenseitenübergänge als auch die Eckübergänge zwischen Versteifungssteg und Seitenwand können vorzugsweise mit einem Radius r versehen sein, dergestalt, dass für den Radius r des kreisbogenförmigen Eck-, Decken- oder Deckenseitenübergangs gilt:

$$r = m * \varphi + b,$$

wobei

$\varphi$ = Winkel [°] zwischen den jeweiligen Teilen des Einschweißausgießers (Versteifungssteg, Seitenwand und Decke),

$1,5*10^{-3}$ mm/ ° ≤ m ≤ $7*10^{-3}$ mm/ °,

- $0,3$ mm ≤ b ≤ $0,2$ mm.

Diese einfache Abhängigkeit hat sich aus einer Vielzahl umfangreicher Versuche herauskristallisiert, wobei es sich hierbei um eine angenäherte Betrachtung der optimalen Parameter handelt, da der eigentliche Wirkzusammenhang noch nicht geklärt ist. Die Krümmungsmittelpunkte der Deckenübergänge bzw. Seitendecken-übergänge befinden sich zwischen Steg und Decke bzw. zwischen Decke und Seitenwand.

Weitere Vorteile und Einzelheiten lassen sich der nachfolgenden Figurenbeschreibung entnehmen.

In den Figuren zeigt auf schematische Weise:

Fig. 1 einen erfindungsgemäßen Gegenstand in einer Seitenansicht,

Fig. 2 den Gegenstand nach Fig. 1 in einer Unteransicht,

Fig. 3 den Ausschnitt A gemäß Fig. 2,

Fig. 4 einen Schnitt entlang IV-IV gemäß Fig. 2,

Fig. 5 eine Ansicht eines weiteren erfindungsgemäßen Gegenstands von unten.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

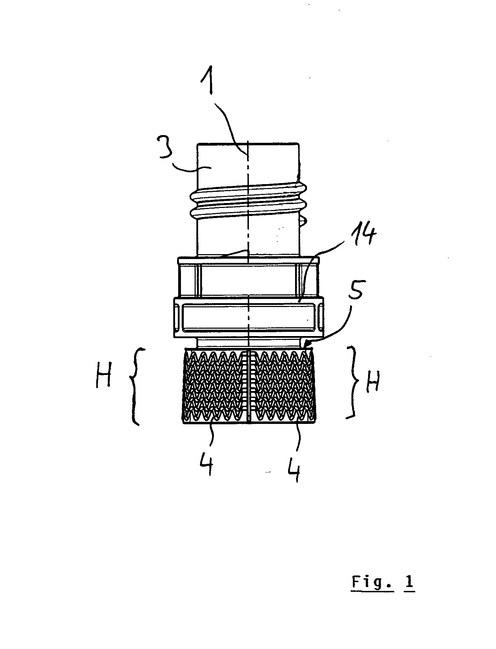

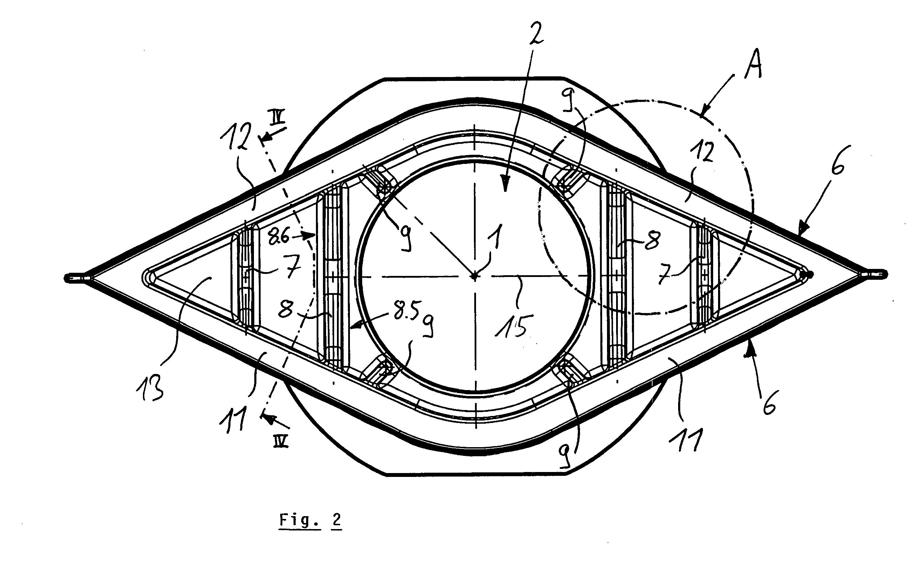

Ein erfindungsgemäßer Einschweißausgießer zum Ultraschallverschweißen zwischen zwei Folienwänden eines als Folienbeutel ausgebildeten Kunststoffbehältnisses weist gemäß den Fig. 1 und 2 einen mit einem eine vertikale Längsmittelachse 1 aufweisenden Ausgießkanal 2 versehenen Hals 3 und zwei mittelbar über einen Kragen 5 hiermit verbundene, mit Schweißlinien 4 versehene äußere Seitenflächen 6 auf. An diesen Seitenflächen, die zu Seitenwänden 11 und 12 gehören, werden im Wesentlichen über die Höhe H zwei Folienwände angelegt und mit dem Einschweißausgießer verschweißt. Hierzu werden zwei Ultraschall-Siegelbacken an die Seitenflächen bzw. die Folienwände herangefahren. Innenseitig sind eine Mehrzahl von Versteifungsstegen 7,8 und 9, die die zu den zugehörigen Seitenflächen 6 gehörenden Seitenwände 11 und 12 stabilisieren (vgl. Fig. 2).

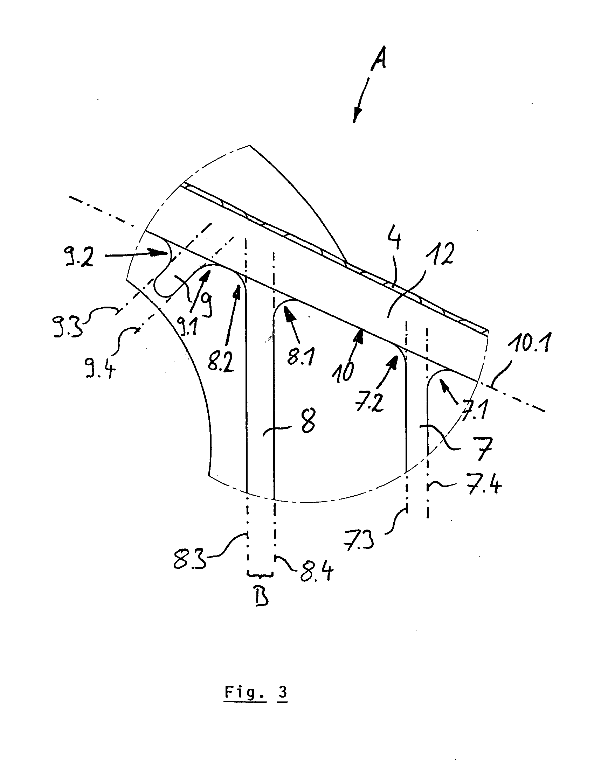

Zwischen den Seitenwänden 12 bzw. 11 und den Versteifungsstegen 7,8,9 sind Eckübergänge 7.1, 7.2, 8.1, 8.2, 9.1, 9.2 ausgebildet, die nachfolgend näher definiert werden (vgl. Fig. 3).

Jedem Versteifungssteg 7,8 und 9 sind in der definierten Ebene quer zur vertikalen Längsmittelachse 1 jeweils der Haupterstreckung des Versteifungsstegs in dessen jeweiligen Seitenoberflächen folgende Geraden 7.3, 7.4, 8.3, 8.4 und 9.3, 9.4 zugeordnet. Darüber hinaus verläuft eine Gerade 10.1 entlang und deckungsgleich mit der Haupterstreckung der Oberfläche 10 der Seitenwand 11.

Die Geraden 7.3, 7.4, 8.3, 8.4 und 9.3 sowie 9.4 schneiden die Gerade 10.1 in der Oberfläche 10.10. Erkennbar verläuft die Kontur des Ausgießers abgesetzt von diesen Geraden, wodurch die Eckübergänge 7.1, 7.2, 8.1, 8.2, 9.1, 9.2 durch diese Kontur des Einschweißausgießers gebildet werden. Die Konturen entsprechen jeweiligen Kreisbogenabschnitten eines imaginären Kreises, dessen Krümmungsradius im Falle der Eckübergänge 7.1, 8.1 und 9.2 0,15mm (Krümmungsradius) beträgt. Entsprechend weisen die Eckübergänge eine Krümmung von rund 6,7/mm auf.

Die Eckübergänge 7.2, 8.2 und 9.2 weisen eine Krümmung von rund 3,3/mm und mithin einen Krümmungsradius von 0,3 mm auf.

Durch diese erfindungsgemäße Ausgestaltung eines Einschweißausgießers wird dieser für einen Ultraschall-Einschweißvorgang geeignet.

Vorzugsweise weisen die zu den einzelnen Kreisbogenabschnitten gehörenden Radien eine Länge von mindestens 20%, bevorzugter von mindestens 25% der zugehörigen Breite B eines Versteifungsstegs auf.

In analoger Weise zu den in Fig. 3 definierten und erläuterten Eckübergängen sind zwischen den Versteifungsstegen 7,8 und 9 Deckenübergänge im Übergangsbereich zu einer Decke 13 und betrachtet in einer Ebene 15 definierbar. Die Ebene 15 umfasst in diesem Fall die zentrale Längsmittelachse 1, kann jedoch auch parallel zu ihr liegen. Die Decke 13 ist Teil des Kragens 5. Auch die dort vorhandenen Deckenübergänge (beispielhaft 8.5 und 8.6, Fig. 2) weisen Krümmungen ≤ 10/mm auf.

Führungsstege 14 dienen der Zuführung beispielsweise zu einer Siegelstation bzw. zu einer Abfüllstation.

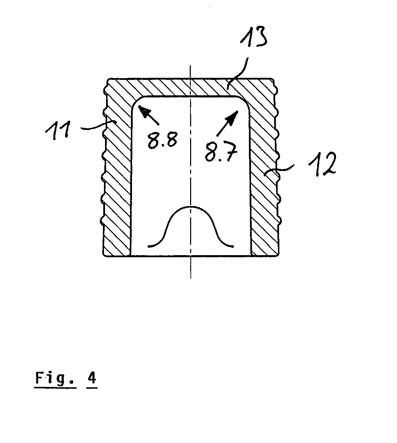

Im Ausführungsbeispiel gemäß Fig. 4 sind zwei weitere Übergänge 8.7 und 8.8 aufgezeigt, die zwischen der Seitenwand 11 bzw. 12 und der Decke vorhanden sind und auf analoge Weise definiert werden. Auch die dort vorhandenen, in diesem Ausführungsbeispiel kreisbogenförmigen Übergänge weisen Radien auf, die zwischen 0,15 mm und 0,3 mm betragen. Dies führt zur Aussteifung der dort vorhandenen Übergänge und zu einer guten Anbindung der Seitenwände an die Decke 13.

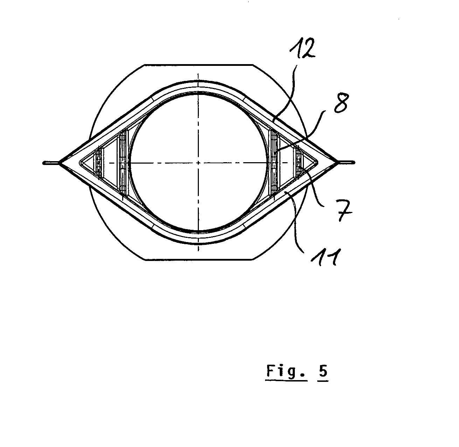

Im Ausführungsbeispiel der Fig. 5 ist ein weiterer erfindungsgemäßer Einschweißausgießer in einer Unteransicht gezeigt. Die auch als Stapelstege dienenden Versteifungsstege 9 des Ausführungsbeispiels der Fig. 1 und 2 sind in diesem Fall nicht mehr vorhanden. Stattdessen ist der Ausgießkanal mit einem vergrößerten Durchmesser versehen. Für die Übergänge zwischen den Versteifungsstegen 7 und 8 gilt jedoch ebenfalls wieder, dass die Übergänge dieser Versteifungsstege zu den Seitenwänden 11 und 12 eine Krümmung ≤ 10/mm aufweisen und den Einschweißausgießer erst für eine Ultraschalleinschweißung herrichten.

## Patentansprüche

1. Einschweißausgießer zum Verbinden mit einem Behältnis, insbesondere zum Verbinden mit zwei Folienwänden eines Kunststoffbehältnisses, wobei der Einschweißausgießer einen mit einem eine vertikale Längsmittelachse (1) aufweisenden Ausgießkanal (2) versehenen Hals (3) und zwei hiermit verbundene, vorzugsweise mit Schweißlinien (4) versehene, äußere Seitenflächen (6) aufweist, die zur Verschweißung mit dem Behältnis vorgesehen sind und an deren zugehörigen Seitenwänden (11, 12) innenseitig eine Mehrzahl von Versteifungsstegen (7, 8, 9) angeordnet sind, die Eckübergänge (7.1, 7.2, 8.1., 8.2, 9.1, 9.2) mit der jeweiligen Seitenwand (12) ausbilden, wobei betrachtet in einer Ebene quer zur Längsmittelachse (1) ein Eckübergang (7.1, 7.2, 8.1., 8.2, 9.1, 9.2) durch eine zwischen zwei sich schneidenden Geraden (7.3, 7.4, 8.3, 8.4, 9.3, 9.4, 10.1) befindliche Kontur des Einschweißausgießers definiert ist, wobei die eine Gerade (10.1) die Haupterstreckung der Oberfläche (10) der Seitenwand (12) und die andere Gerade (7.3, 7.4, 8.3, 8.4, 9.3, 9.4) diejenige der Oberfläche des Versteifungsstegs (7, 8, 9) darstellt, **dadurch gekennzeichnet, dass** die Kontur zumindest eines Eckübergangs (7.3, 7.4, 8.3, 8.4, 9.3, 9.4) zur Stabilisierung des Einschweißausgießers während eines Ultraschall-Einschweißvorganges eine Krümmung kleiner 10/mm aufweist.

2. Einschweißausgießer nach Anspruch 1, **dadurch gekennzeichnet, dass** die Kontur des Eckübergangs (7.3, 7.4, 8.3, 8.4, 9.3, 9.4) einen Kreisbogen ausbildet.

3. Einschweißausgießer nach Anspruch 1 oder 2, **dadurch gekennzeichnet, dass** die Kontur einen Kreisbogenabschnitt mit einer Krümmung kleiner gleich 8/mm, vorzugsweise kleiner gleich 6,7/mm, aufweist.

4. Einschweißausgießer nach einem der vorherigen Ansprüche, **dadurch gekennzeichnet, dass** betrachtet in einer Unteransicht in Richtung der Längsmittelachse (1) zumindest ein von der einen Seitenwand (12) zur gegenüberliegenden Seitenwand (11) reichender Versteifungssteg (7, 8) in allen vier Eckübergängen (7.3, 7.4, 8.3, 8.4) eine Krümmung kleiner 10/mm, insbesondere kleiner 6, 7/mm, aufweist.

5. Einschweißausgießer nach einem der vorherigen Ansprüche, **dadurch gekennzeichnet, dass** zumindest ein an nur einer Seitenwand (12) angebundener Versteifungssteg (9) in seinen Eckübergängen (9.1,9.2) eine Krümmung von kleiner 10/mm aufweist.

6. Einschweißausgießer nach einem der vorherigen Ansprüche, **dadurch gekennzeichnet, dass** betrachtet in einer Ebene (15) parallel zur vertikalen Längsmittelachse (1) ein analog zu einem Eckübergang zwischen einer Decke (13) und einem Versteifungssteg (8) definierter Deckenübergang (8.5,8.6) eine Krümmung von kleiner 10/mm aufweist.

7. Einschweißausgießer nach einem der vorherigen Ansprüche, **dadurch gekennzeichnet, dass** zumindest ein Deckenübergang (8.5,8.6) einen Kreisbogen ausbildet.

8. Einschweißausgießer, insbesondere nach einem der vorherigen Ansprüche, **dadurch gekennzeichnet, dass** betrachtet in einer Ebene senkrecht zur Seitenwand ein Deckenseitenübergang (8.7,8.8) zwischen einer/der Decke (13) und der Seitenwand (11,12) eine Krümmung kleiner 10/mm aufweist.

9. Einschweißausgießer nach einem der vorherigen Ansprüche unter Einschluss von Anspruch 2, 7 oder 8, **dadurch gekennzeichnet, dass** für den Radius r des kreisbogenförmigen Eck-, Decken- oder Deckenseitenübergangs gilt:

$$r = m * \varphi + b,$$

wobei
$\varphi$ = Winkel [°] zwischen den jeweiligen Teilen des Einschweißausgießers (Versteifungssteg, Seitenwand, Decke),
$1, 5*10^{-3}$ mm/ ° $\leq m \leq 7*10^{-3}$ mm/ °,
$- 0, 3$ mm $\leq b \leq 0, 2$ mm.

Fig. 1

Fig. 2

Fig. 3

8

Fig. 4

Fig. 5

EP 2 644 530 A1

Europäisches
Patentamt
European
Patent Office
Office européen
des brevets

**EUROPÄISCHER RECHERCHENBERICHT**

Nummer der Anmeldung

EP 13 00 1312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 661 208 A1 (SUMITOMO BAKELITE CO [JP]) 5. Juli 1995 (1995-07-05) * Spalte 17, Zeile 25 - Spalte 18, Zeile 40; Abbildungen 10-12 * ----- | 1-9 | INV. B65D75/58 B29C65/08 B29C65/00 |
| X | FR 2 924 691 A1 (OREAL [FR]) 12. Juni 2009 (2009-06-12) * Abbildungen 5-8 * ----- | 8 | |

RECHERCHIERTE SACHGEBIETE (IPC)

B65D
B29C

Der vorliegende Recherchenbericht wurde für alle Patentansprüche erstellt

| Recherchenort | Abschlußdatum der Recherche | Prüfer |
|---|---|---|
| München | 17. Juni 2013 | Galli, Monia |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes
Dokument

EPO FORM 1503 03.82 (P04C03)

**EP 2 644 530 A1**

**ANHANG ZUM EUROPÄISCHEN RECHERCHENBERICHT
ÜBER DIE EUROPÄISCHE PATENTANMELDUNG NR.**

EP 13 00 1312

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2013

| Im Recherchenbericht angeführtes Patentdokument | Datum der Veröffentlichung | Mitglied(er) der Patentfamilie | Datum der Veröffentlichung |
|---|---|---|---|
| EP 0661208 A1 | 05-07-1995 | AU 672932 B2 | 17-10-1996 |
| | | AU 8036594 A | 06-07-1995 |
| | | CA 2138343 A1 | 28-06-1995 |
| | | DE 69403767 D1 | 17-07-1997 |
| | | DE 69403767 T2 | 09-10-1997 |
| | | EP 0661208 A1 | 05-07-1995 |
| | | ES 2105481 T3 | 16-10-1997 |
| | | US 5606844 A | 04-03-1997 |
| FR 2924691 A1 | 12-06-2009 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202006013587 U1